# EUROPEAN PATENT APPLICATION

(11) **EP 1 840 865 A1**
(43) Date of publication of application: **03.10.2007**
(21) Application number: 07104115.6
(22) Date of filing: 14.03.2007
(51) Int. Cl.: G09G 3/28

(54) **Plasma display, and driving device and method thereof**

(30) Priority: 29.03.2006 KR 20060028307
(71) Applicant: Samsung SDI Co., Ltd., Suwon-si, Gyeonggi-do (KR)
(72) Inventor: Yang, Jin-Ho Legal & IP Team, Yongin-si Kyunggi-do (KR)
(74) Representative: Read, Matthew Charles

(57) **Abstract**

In a plasma display, an output terminal of a scan integrated circuit is coupled to a plurality of scan electrodes, a first input terminal of the scan integrated circuit is coupled to a voltage source supplying a VscH voltage, and a second input terminal thereof is coupled to a source of a transistor. A gate of a transistor is coupled to an output terminal of a gate driver, a first node of the gate driver is coupled to a first voltage source supplying a first voltage, and a second node thereof is coupled to the source of the transistor. A first terminal of a capacitor is coupled to the first node of the gate driver, and a second terminal thereof is coupled to the second input terminal of the scan integrated circuit.

## Description

This invention relates to a plasma display, and a driving apparatus and method thereof.

A plasma display includes a plasma display panel (PDP) that uses plasma generated by a gas discharge process to display characters or images. The PDP includes, depending on its size, thousands to millions of cells that provide image pixels arranged in a matrix pattern.

Information is displayed on the PDP in sequential frames. One frame of such a plasma display is divided into a plurality of subfields having weight values, and each subfield includes a reset period, an address period, and a sustain period. During the reset period of each subfield, a scan pulse is sequentially applied to a plurality of scan electrodes to select turn-on/turn-off cells (i.e., cells to be turned on or off). The sustain period causes the cells to either continue discharge displaying an image on the addressed cells or to remain inactive.

In the plasma display, to sequentially apply the scan pulse to the plurality of scan electrodes, a scan integrated circuit (IC) is coupled to each scan electrode, and a transistor is coupled between a ground of the scan IC and a voltage source supplying a voltage of the scan pulse. In addition, current flows through current paths, supplying a low level voltage of a sustain pulse and supplying the voltage of the scan pulse. The currents flow through body diodes of a transistor, when the transistor coupled between the ground of the scan IC and the voltage source supplying the voltage of the scan pulse is turned on.

In addition, a bootstrap method is used to supply a voltage for driving the transistor and the scan IC in the plasma display. Since a bootstrap transistor uses the bootstrap method, the cost of the circuit of the plasma display increases.

An aspect of the present invention has been made in an effort to provide a plasma display for reducing a circuit cost, and a driving apparatus and method thereof.

An exemplary plasma display according to an embodiment of the present invention includes a plurality of first electrodes, a scan integrated circuit, a first transistor, a second transistor, a gate driver, a first capacitor, a regulator, and a second capacitor. The scan integrated circuit includes first and second input terminals and a plurality of first output terminals respectively coupled to the plurality of first electrodes, and the scan integrated circuit selectively applies a voltage at the second input terminal to the corresponding first electrode among the plurality of first electrodes during an address period. The first transistor is coupled between a first voltage source supplying a first voltage and the plurality of first electrodes. The second transistor is coupled between the first transistor and the second input terminal. The gate driver includes a second output terminal coupled to a gate of the second transistor, a first node coupled to a second voltage source supplying a second voltage, and a second node coupled to a source of the second node and the second input terminal. The first capacitor includes a first terminal coupled to the first node, and a second terminal coupled to the second input terminal. The regulator includes a third input terminal coupled to the first terminal of the first capacitor and a third output terminal coupled to the scan integrated circuit, and the regulator converts the second voltage to a third voltage and outputs the third voltage. The second capacitor is coupled between the third output terminal of the regulator and the second input terminal.

An exemplary driving apparatus of a plasma display including a plurality of scan electrodes according to an embodiment of the present invention includes a first transistor, a gate driver, a first capacitor, and a plurality of scan circuits. The gate driver includes a first node coupled to a first voltage source supplying a first voltage and a second node coupled to a first terminal of the first transistor, and the gate driver selects a voltage of the first and second nodes to output the voltage to the first transistor. The first capacitor includes a first terminal coupled to the first node and a second terminal coupled to the second node. The plurality of scan circuits operates by a voltage corresponding to the first voltage, the plurality of scan circuits includes a plurality of output terminals respectively coupled to the plurality of scan electrodes, and the plurality of scan circuits selectively output a voltage of a common input terminal coupled to the first terminal of the first transistor to the plurality of output terminals.

In an exemplary method of driving a plasma display including a plurality of first electrodes and a scan integrated circuit coupled to the plurality of first electrodes: a capacitor including a first terminal coupled to a reference voltage source of the scan integrated circuit is charged with a first voltage; the scan integrated circuit is driven by a second voltage corresponding to a second terminal voltage of the capacitor during an address period; and a transistor including a source coupled to the reference voltage source is turned on by using the second terminal voltage of the capacitor for a sustain period.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of embodiments of the invention, given by way of illustrative example, taken in conjunction with the accompanying drawings of which:
Figure 1 is a diagram representing a plasma display according to an exemplary embodiment of the present invention.
Figure 2 is a diagram representing driving waveforms of the plasma display according to the exemplary embodiment of the present invention.
Figure 3 and Figure 4 respectively show driving circuits of the scan electrode driver according to first and second exemplary embodiments of the present invention.

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification. In addition, unless explicitly described to the contrary, the word "comprise" and variations such as "comprises" or "comprising," will be understood to imply the inclusion of stated elements but not the exclusion of any other elements.

In addition, wall charges mentioned in the following description mean charges formed and accumulated on a wall (e.g., a dielectric layer) close to an electrode of a discharge cell. A wall charge will be described as being "formed" or "accumulated" on the electrode, although the wall charges do not actually touch the electrodes. Further, a wall voltage relates to a potential difference formed on the wall of the discharge cell by the wall charge.

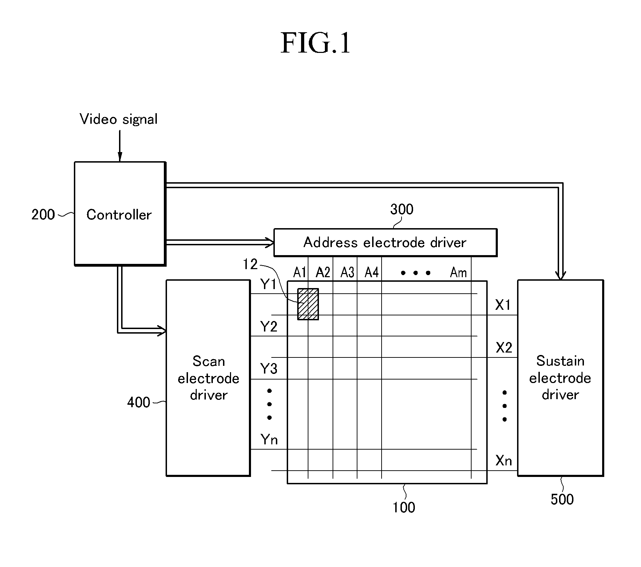

In Figure 1 shows a plasma display panel (PDP) 100, a controller 200, an address electrode driver 300, a scan electrode driver 400, and a sustain electrode driver 500.

The PDP 100 includes a plurality of address electrodes A1 to Am extending in a column direction, and a plurality of sustain and scan electrodes X1 to Xn and Y1 to Yn in pairs extending in a row direction. In general, the X electrodes X1 to Xn are formed to correspond to the Y electrodes Y1 to Yn, respectively. The X electrodes and Y electrodes perform a display operation displaying an image in the sustain period. The Y electrodes Y1 to Yn and the X electrodes X1 to Xn are disposed so as to cross the A electrodes A1 to Am. A discharge space at a crossing region of the A electrodes A1 to Am and the X and Y electrodes X1 to Xn and Y1 to Yn forms a cell 12. It is to be noted that the construction of the PDP is only an example, and panels having different structures, to which a driving waveform to be described later can be applied, may be used.

The controller 200 receives an external video signal, and outputs an address (A) electrode driving control signal, a sustain (X) electrode driving control signal, and a scan (Y) electrode driving control signal. The controller 200 drives one frame that is divided into a plurality of subfields. Each subfield includes an address period and a sustain period.

The address electrode driver 300 receives the A electrode driving control signal from the controller 200, and applies a display data signal selecting a discharge cell on which an image will be displayed on each address electrode.

The scan electrode driver 400 receives the Y electrode driving control signal from the controller 200, and applies a driving voltage to the Y electrode.

The sustain electrode driver 500 receives the X electrode driving control signal from the controller 200, and applies a driving voltage to the X electrode.

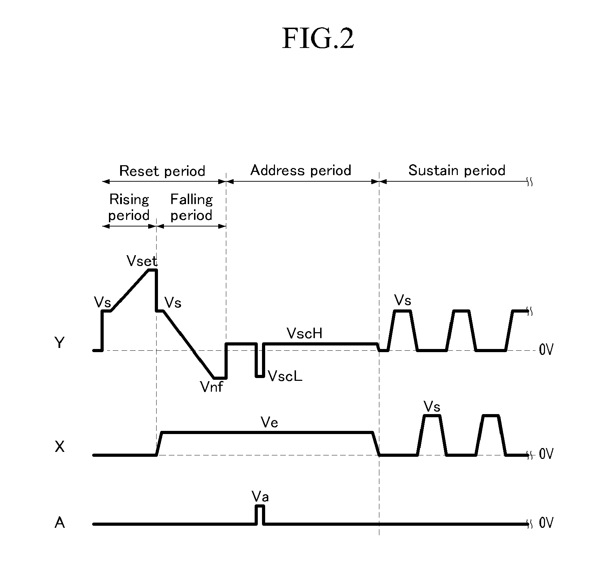

Figure 2 shows a diagram representing driving waveforms of the plasma display according to an exemplary embodiment of the present invention. For convenience of description, a driving waveform applied to the Y, X, and A electrodes forming one cell will be described.

As shown in Figure 2, during a rising period of the reset period, while the X electrode is maintained at a reference voltage (i.e., 0V in Figure 2), a voltage at the Y electrode gradually increases from a Vs voltage to a Vset voltage. As also noted in Figure 2, the voltage at the Y electrode is increased in a ramp pattern. A weak discharge is generated between the Y and X electrodes and between the Y and A electrodes while the voltage at the Y electrode is increased, and consequently (-) wall charges are formed on the Y electrode, and (+) wall charges are formed on the X and A electrodes.

Then, during a falling period in the reset period, a voltage Ve is applied to the X electrode, and the voltage at the Y electrode gradually decreases from the Vs voltage to a voltage Vnf. While the voltage of the Y electrode decreases, a weak discharge occurs between the Y and X electrodes and between the Y and A electrodes. Accordingly, the negative (-) wall charges formed on the Y electrode and the positive (+) wall charges formed on the X and A electrodes are eliminated. In general, the Vnf voltage is usually set close to a discharge firing voltage between the Y and X electrodes. Then, the wall voltage between the Y and X electrodes becomes near OV, and accordingly, a discharge cell that has not experienced an address discharge in the address period may be prevented from misfiring (the misfiring between the Y and X electrodes) in the sustain period.

During the address period, to select discharge cells to be turned on, while the Ve voltage is applied to the X electrode, a scan pulse sequentially having a voltage VscL is applied to the plurality of Y electrodes. The VscL voltage is also referred to as a scan voltage. In this case, a voltage Va is applied to the A electrode passing through the discharge cell to be turned on, from among the plurality of discharge cells formed by the Y electrode receiving the VscL voltage and the X electrode. As a result, (+) wall charges are formed on the Y electrode and the (-) wall charges are formed on the A and X electrodes for the cell concerned, since an address discharge is generated between the A electrode receiving the Va voltage and the Y electrode receiving the VscL voltage and between the Y electrode receiving the VscL voltage and the X electrode receiving the Ve voltage. In this case, the VscL voltage is set to be equal to or lower than the Vnf voltage. In addition, a VscH voltage (i.e., a non-scan voltage) that is higher than the VscL voltage is applied to the scan electrode Y not receiving the VscL voltage, and a reference voltage is applied to the address electrode A of the discharge cell that is not selected.

The scan electrode driver 400 selects the Y electrode to which the scan pulse having the VscL voltage is applied among the plurality of Y electrodes Y1 to Yn in order to perform the above operation of the address period. For example, in a single driving method, the Y electrode may be selected according to an order of arrangement of the Y electrodes in the vertical direction. When a Y electrode is selected, the address electrode driver 300 selects turn-on discharge cells among discharge cells formed on the selected Y electrode. That is, the address electrode driver 300 selects A electrodes to be applied with the address pulse of the voltage of Va, among the A electrodes A1 to Am.

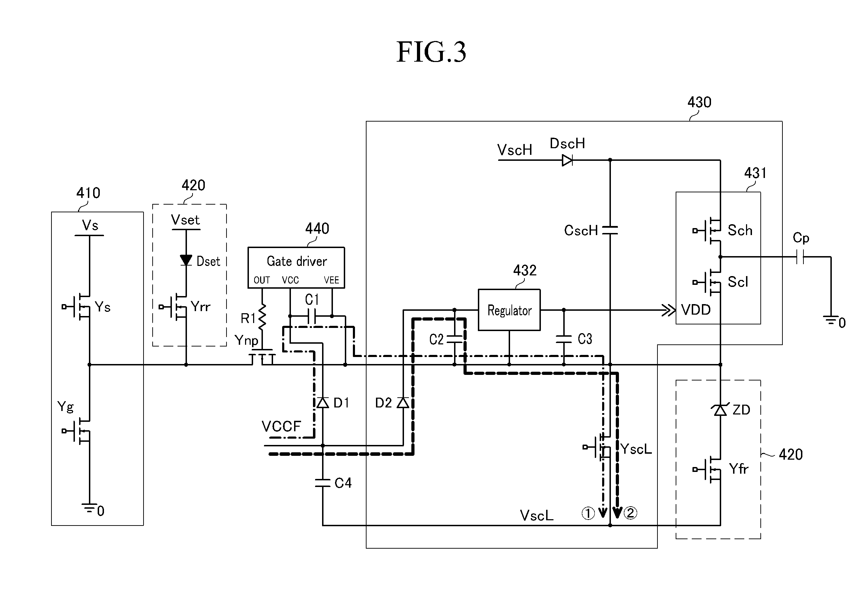

During the sustain period, sustain pulses alternately having a high level voltage (i.e., the Vs voltage in Figure 2) and a low level voltage (i.e., 0V in Figure 3A) of opposite phases are applied to the Y and X electrodes, and accordingly the sustain discharge is generated between the Y and X electrodes of the turn-on discharge cell. Subsequently, the sustain pulse is repeatedly applied to the X and Y electrodes a predetermined number of times that corresponds to a weight of the corresponding subfield.

Figure 3 is a diagram of a driving circuit of the scan electrode driver 400 according to a first exemplary embodiment of the present invention.

As shown in Figure 3, the driving circuit of the scan electrode driver 400 includes a sustain driver 410, a reset driver 420, a scan driver 430, a transistor Ynp, a gate driver 440, a resistor R1, a capacitor C1, a diode D1, and a capacitor C4.

The sustain driver 410 includes transistors Ys and Yg, and applies the sustain pulse having the Vs voltage and a 0V voltage to the Y electrode during the sustain period. A drain of the transistor Ys is coupled to a voltage source Vs supplying the Vs voltage and a source thereof is coupled to the Y electrode of a panel capacitor Cp. A source of the transistor Yg is coupled to a ground terminal 0 supplying the 0V voltage and a drain thereof is coupled to the Y electrode of the panel capacitor Cp.

The reset driver 420 includes transistors Yrr and Yfr, a Zener diode ZD and a diode Dset. In addition, the reset driver 420 gradually increases the voltage at the Y electrode from the Vs voltage to the Vset voltage during the rising period of the reset period, and gradually decreases the voltage at the Y electrode from the Vs voltage to the Vnf voltage during the falling period of the reset period. A drain of the transistor Yrr is coupled to a voltage source Vset supplying the Vset voltage and a source thereof is coupled to the Y electrode of the panel capacitor Cp. The diode Dset is formed in an opposite direction of a body diode of the transistor Yrr to interrupt a current caused by the body diode of the transistor Yrr. In addition, the transistor Yfr is coupled between a voltage source VscL supplying the VscL voltage and the Y electrode of the panel capacitor Cp. In this case, since the Vnf voltage is set to be higher than the VscL voltage in the driving waveform shown in Figure 2, an anode of the Zener diode ZD is coupled to a drain of the transistor Yfr and a cathode thereof is coupled to the Y electrode. Here, it is assumed that the Vnf voltage is increased from the VscL voltage by a breakdown voltage.

The scan driver 430 includes a scan circuit 431, a diode DscH and D2, a capacitor CscH, C2 and C3, a transistor YscL, a regulator 432.

The scan circuit 431 includes a first input terminal, a second input terminal, and an output terminal coupled to the Y electrode. In addition, the scan circuit 431 selectively applies a voltage from the first input terminal and a voltage from the second input terminal to the Y electrode in order to select the turn-on discharge cell during the address period. While one scan circuit 431 coupled to one Y electrode is illustrated in Figure 3, a plurality of scan circuits 431 respectively coupled to the plurality of Y electrodes Y1 to Yn are provided. In addition, one scan integrated circuit IC is formed by the plurality of scan circuits, and a plurality of output terminals of the scan IC may be respectively coupled to the plurality of Y electrodes. In this case, the scan IC includes a shift register (not shown) sequentially outputting a control signal to the scan circuits.

The scan circuit 431 includes transistors Sch and Scl. A source of the transistor Sch and a drain of the transistor Scl are respectively coupled to the panel capacitor Cp. It will be appreciated that the display cells of the PDP panel 100 overlaid by the Y electrode will exhibit a capacitance, which is referred to herein as the panel capacitance. An anode of the diode DscH is coupled to a voltage source VscH supplying a VscH voltage, and a cathode of the diode DscH is coupled to the first input terminal of the scan circuit 431. The cathode of the diode DscH is coupled to a first terminal of the capacitor CscH, and the second input terminal of the scan circuit 431 is coupled to a second terminal of the capacitor CscH. In this case, the transistor YscL is turned on, and the capacitor CscH is charged with a voltage of (VscH-VscL). The transistor YscL is coupled between a voltage source VscL and the second input terminal of the scan circuit 431. In the scan circuit 431, a source of the transistor YscL is a reference voltage source. That is, voltages of the scan circuit 431 are determined based on a source voltage of the transistor YscL.

In addition, to supplying a control signal to a gate of the transistors Scl and Sch of the scan circuit 431, a driving voltage generating the control signal in a shift register is required. A regulator 432 is coupled between a voltage source VCCF and the scan circuit 431 to supply the driving voltage to the scan circuit 431. The regulator 432 includes an input terminal, a reference voltage terminal, and an output terminal. In addition, the regulator 432 converts an input voltage to a VDD voltage that is the driving voltage of the scan circuit 431, and outputs the VDD voltage to the scan circuit 431 through the output terminal. The input terminal of the regulator 432 and the voltage source VCCF are coupled to a first terminal of a capacitor C2, and a reference voltage terminal of the regulator 432 is coupled to the second input terminal of the scan circuit 431. In this case, since voltages of capacitors C2 and C3 are used to generate a voltage of the scan circuit 431, second terminals of the capacitors C2 and C3 are coupled to a reference voltage source of the scan circuit 431 (i.e., the source of the transistor YscL). In addition, an anode of a diode D2 is coupled to the voltage source VCCF, a cathode of the diode D2 is coupled to the first terminal of the capacitor C2, a first terminal of the capacitor C4 is coupled to the voltage source VCCF, and a second terminal of the capacitor C4 is coupled to the voltage source VscL. Accordingly, the diode D2 is used to form a charging path (2) charging the capacitor C2 using a voltage (VCCF-VscL) when the transistor YscL is turned on. Another element may be used in the charging path (2) instead of the diode D2 (e.g., a transistor). The regulator 432 produces the voltage VDD, from the input voltage to the regulator developed the capacitor C2, and feeds the output voltage VDD to the capacitor C3. When the voltage of the voltage source VCCF is equal to that of the driving voltage VDD, the regulator 432 and the capacitor C3 may be eliminated.

The transistor Ynp is used to interrupt a current path extending from ground terminal 0, through the transistor Yg and the transistor YscL, to the voltage source VscL when the transistor YscL is turned on.More specifically, the drain of the transistor Ynp is coupled to the drain of the transistor Yg, and the source of the transistor Ynp is coupled to the drain of the transistor YscL.

The gate driver 440 is coupled between a gate and a source of the transistor Ynp and drives the transistor Ynp. The gate driver 440 includes an output terminal OUT, a high voltage terminal VCC, and a low voltage terminal VEE, and applies a high voltage through terminal VCC or a low voltage through terminal VEE to the gate of the transistor Ynp. In this case, when a voltage difference between the source and the drain of the transistor Ynp is greater than the voltage (VCCF-VscL), the transistor Ynp is turned on. A first terminal of the capacitor C1 is coupled to the high voltage terminal VCC of the gate driver 440, and the second terminal of the capacitor C1 is coupled to the low voltage terminal VEE of the gate driver 440. In addition, the first terminal of the capacitor C1 is coupled to the voltage source VCCF through the diode D1, and the second terminal of the capacitor C1 is coupled to the source of the transistor Ynp. Thus, the anode of the diode D1 is coupled to the voltage source VCCF, and the terminal of the capacitor C1 is coupled to a cathode of the diode D1. The diode D1 is used to form a charging path ① in order to charge the capacitor C1 with the voltage (VCCF-VscL) when the transistor YscL is turned on. However, an element (e.g., a transistor) can be used instead of the diode D1 to form the charging path. In addition, a resistor R1 is coupled between the output terminal of the gate driver 440 and the gate of the transistor Ynp.

Thus, the capacitor C1 is charged with the voltage (VCCF-VscL), and so the voltage at the high voltage terminal VCC is set to be greater than the voltage at the low voltage terminal VEE by the (VCCF-VscL) voltage. The transistor Ynp is turned on when the voltage at the high voltage terminal VCC is applied to the gate of the transistor Ynp, and the transistor Ynp is turned off when the voltage at the low voltage terminal VEE is applied to the gate of the transistor Ynp.

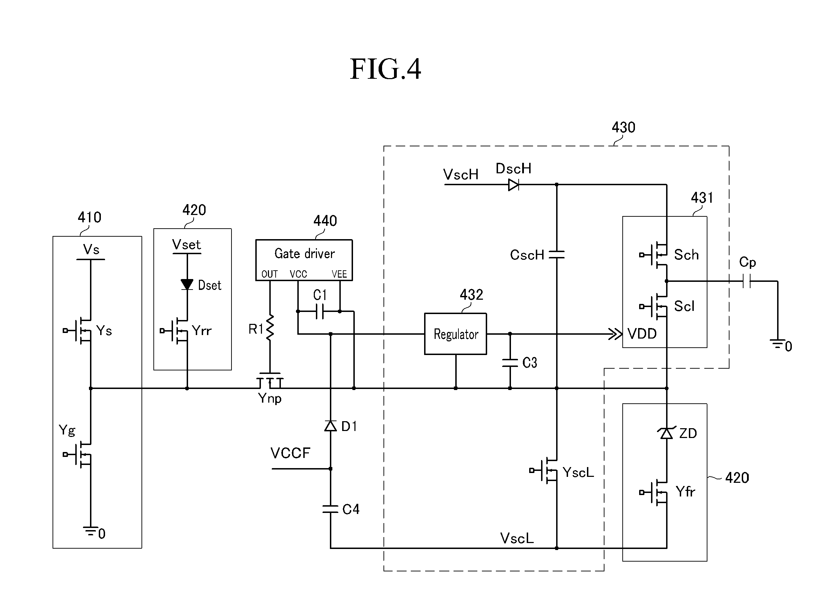

In the driving circuit according to the first exemplary embodiment of the present invention, the capacitors C1 and C2 and the diodes D1 and D2 are provided to supply the driving voltage driving the transistor Ynp and the scan circuit 431. However, according to another aspect of the present invention, one capacitor C1 and one diode D1 may be used to drive the transistor Ynp and the scan circuit 431, which will be described with reference to Figure 4.

Figure 4 shows a diagram representing a driving circuit of the scan electrode driver 400 according to a second exemplary embodiment of the present invention.

As shown in Figure 4, in the driving circuit of the scan electrode driver according to the second exemplary embodiment of the present invention, the input terminal of the regulator 432 is coupled to a first terminal of the capacitor C1, and the reference voltage terminal of the regulator 432 is coupled to a second terminal of the capacitor C1. In the above configuration, since the (VCCF-VscL) voltage charged in the capacitor C1 is input to the input terminal of the regulator 432, the capacitor C2 and the diode D2 may be eliminated. Accordingly, since the driving circuit according to the second exemplary embodiment of the present invention is further simplified compared to that of the first exemplary embodiment of the present invention, a circuit cost is reduced.

In addition, when a level of the driving voltage VDD of the scan circuit 431 is equal to that of the VCCF voltage in the second exemplary embodiment of the present invention, the regulator 432 and the capacitor C3 may be eliminated. That is, a voltage at the first terminal of the capacitor C1 is applied as the driving voltage of the scan circuit 431.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A driving apparatus for a plasma display comprising a plurality of scan electrodes, the driving apparatus comprising:
a first transistor (Ynp);
a gate driver (440) comprising a first node (VCC) coupled to a first voltage source (VCCF) for supplying a first voltage and a second node (VEE) coupled to a first terminal of the first transistor, the gate driver selecting a voltage of the first and second nodes to output the voltage to control the conductive condition of the first transistor;
a first capacitor (C1) comprising a first terminal coupled to the first node and a second terminal coupled to the second node; and
a plurality of scan circuits (431) operable by a voltage corresponding to the first voltage, the plurality of scan circuits comprising a plurality of output terminals respectively for coupling to the plurality of scan electrodes, the plurality of scan circuits in use selectively outputting a voltage of a common input terminal coupled to the first terminal of the first transistor, to the plurality of output terminals.

2. The driving apparatus of claim 1, further comprising a regulator (432) for converting the first voltage to a second voltage that is lower than the first voltage and for outputting the second voltage to the plurality of scan circuits,
wherein the common input terminal is coupled to the first terminal of the first capacitor.

3. The driving apparatus of claim 2, further comprising a second capacitor (C3) coupled to an output terminal of the regulator and the common input terminal of the plurality of scan circuits to be charged with the second voltage.

4. The driving apparatus of any preceding claim, further comprising a second transistor coupled between a second voltage source supplying a third voltage and the common input terminal of the plurality of scan circuits,
wherein the first capacitor is charged when the second transistor is turned on.

5. The driving apparatus of claim 4, further comprising a third capacitor coupled between the first voltage source and the second voltage source.

6. The driving apparatus of claim 4, further comprising a third transistor coupled between a third voltage source supplying a fourth voltage and a second terminal of the first transistor,
wherein the third voltage is lower than the fourth voltage.

7. A method of driving a plasma display comprising a plurality of first electrodes and a scan integrated circuit coupled to the plurality of first electrodes, the method comprising:
charging a capacitor comprising a first terminal coupled to a reference voltage source of the scan integrated circuit with a first voltage;
driving the scan integrated circuit by a second voltage corresponding to a second terminal voltage of the capacitor during an address period; and
turning on a transistor comprising a source coupled to the reference voltage source by using the second terminal voltage of the capacitor for a sustain period.

8. The method of claim 7, wherein the driving of the scan integrated circuit comprises:
converting the first voltage to the second voltage that is lower than the first voltage.

9. The method of claim 7, wherein a drain of the transistor is coupled to a sustain driver supplying a sustain pulse to the plurality of first electrodes during the sustain period.

10. A plasma display comprising:
a plurality of first electrodes;
a scan integrated circuit comprising first and second input terminals, and a plurality of first output terminals respectively coupled to the plurality of first electrodes, the scan integrated circuit selectively applying a voltage (VscH) from the second input terminal to a corresponding first electrode among the plurality of first electrodes during an address period;
a first transistor coupled between a first voltage source, supplying a first voltage, and the plurality of first electrodes;
a second transistor coupled between the first transistor and the second input terminal;
a gate driver comprising a second output terminal coupled to a gate of the second transistor, a first node coupled to a second voltage source supplying a second voltage, and a second node coupled to a source of the second transistor and the second input terminal;
a first capacitor comprising a first terminal coupled to the first node, and a second terminal coupled to the second input terminal;
a regulator comprising a third input terminal coupled to the second terminal of the first capacitor and a third output terminal coupled to the scan integrated circuit, the regulator converting the second voltage to a third voltage and outputting the third voltage;
a second capacitor coupled between the third input terminal of the regulator and the second input terminal of the regulator.

11. The plasma display of claim 10, further comprising:
a third transistor coupled between the second input terminal of the scan integrated circuit and a third voltage source supplying a scan voltage applied to the first electrode of a turn-on discharge cell that is turned on during the address period; and
a charging path charging the first capacitor when the third transistor is turned on.

12. The plasma display of claim 11, wherein the regulator converts a voltage of the first capacitor to a third voltage and charges the second capacitor.

13. The plasma display of claim 11, wherein the charging path comprises a diode comprising an anode coupled to the second voltage source and a cathode coupled to the first terminal of the first capacitor.

14. The plasma display of claim 12, wherein the third voltage is supplied as a driving voltage of the scan integrated circuit.

15. The plasma display of claim 11, wherein the scan voltage is lower than the first voltage.

16. The plasma display of claim 14, wherein when a level of the driving voltage of the scan integrated circuit is equal to the second voltage, the regulator is eliminated.

17. The plasma display of claim 14, wherein the voltage at the first terminal of the first capacitor is applied as the driving voltage of the scan integrated circuit.
